# EUROPÄISCHE PATENTSCHRIFT

(11) **EP 3 954 529 B1**
(45) Veröffentlichungstag und Bekanntmachung des Hinweises auf die Patenterteilung: **22.03.2023**
(21) Anmeldenummer: 21184743.9
(22) Anmeldetag: 09.07.2021
(51) Int. Cl.: B29C 49/42, B29C 49/06, B29C 49/78, B29L 31/00

(54) **VORRICHTUNG UND VERFAHREN ZUM BEHANDELN VON KUNSTSTOFFVORFORMLINGEN MIT INSPEKTIONSEINRICHTUNG**
DEVICE AND METHOD FOR TREATING PLASTIC PRE-FORMS WITH INSPECTION DEVICE
DISPOSITIF ET PROCÉDÉ DE TRAITEMENT DES PRÉFORMES EN MATIÈRE PLASTIQUE POURVU DE DISPOSITIF D'INSPECTION

(30) Priorität: 14.08.2020 DE 102020121425
(43) Veröffentlichungstag der Anmeldung: 16.02.2022
(73) Patentinhaber: KRONES AG, 93073 Neutraubling (DE)
(72) Erfinder: Geltinger, Florian, 93073 Neutraubling (DE)
(74) Vertreter: Bittner, Bernhard

(56) Entgegenhaltungen:
- EP-A1- 3 514 085
- DE-A1-102017 112 455
- DE-A1-102018 122 548
- US-A1- 2018 015 657

## Beschreibung

Die vorliegende Erfindung bezieht sich auf eine Vorrichtung und ein Verfahren zum Behandeln von Kunststoffvorformlingen. Im Stand der Technik ist es seit langem bekannt, dass Kunststoffvorformlinge erwärmt werden und anschließend zu Kunststoffbehältnissen expandiert werden, beispielsweise mittels einer sogenannten Streckblasmaschine. Dabei ist es be kannt, dass zunächst Kunststoffvorformlinge produziert werden, beispielsweise in einer Spritzgussmaschine, diese anschließend sortiert werden, und in diesem sortierten Zustand einer Erwärmungseinrichtung und schließlich auch einer Blasformeinrichtung zugeführt werden. Derartige Vorrichtungen und Verfahren sind in den Patentschriften EP3514085A1, DE102017-112455A1, US2018/015657A1, DE102018-122548A1 beschrieben.

Dabei kann es immer wieder vorkommen, dass derartige Kunststoffvorformlinge abweichende Qualitäten aufweisen bzw. auch Schädigungen aufweisen und aus diesem Grunde nicht für die Weiterverarbeitung geeignet sind.

Daher sind im Stand der Technik Inspektionssysteme bekannt, welche die Kunststoffvorformlinge inspizieren. Dabei ist es beispielsweise bekannt, dass derartige Inspektionssysteme nach einer Spritzgussmaschine vorgesehen sind. Der Nachteil dieser Vorgehensweise liegt darin, dass Beschädigungen der Kunststoffvorformlinge beim Transport, der Lagerung in einem Silo oder beim Einbringen in ein Silo nicht erkannt werden, da dieses Silo der Spritzgussmaschine und auch der Inspektion nachgeordnet ist.

Daneben ist es auch bekannt, dass Inspektionssysteme in einer Ablaufschiene eines Kunststoffvorformlings angeordnet sind. Diese Systeme weisen den Nachteil auf, dass die Kunststoffvorformlinge aufwendig und störungsanfällig vereinzelt werden müssen.

Daneben gibt es auch Inspektionssysteme in der Maschine selbst, beispielsweise in einem Ofen, oder in einer Vereinzelungseinrichtung oder nach dem Ofen. Der Nachteil dieser Vorgehensweise besteht darin, dass durch ein Aussondern eines Kunststoffvorformlings eine Lücke erzeugt wird, welche nicht mehr geschlossen werden kann.

Der vorliegenden Erfindung liegt daher die Aufgabe zugrunde, eine Vorrichtung und ein Verfahren vorzuschlagen, bei dem die Inspektion in einer Weise ausgeführt wird, dass diese das gesamte Handling der Kunststoffvorformlinge weniger beeinflusst, als dies im Stan der Technik üblich ist. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Behandeln von Kunststoffvorformlingen weist ein Reservoir auf, welches dazu geeignet und bestimmt ist, eine Vielzahl von Kunststoffvorformlingen aufzunehmen. Weiterhin weist die Vorrichtung wenigstens eine erste Transporteinrichtung auf, welche die Kunststoffvorformlinge aus dem Reservoir abtransportiert und eine Sortiereinrichtung, welche in einer Transporteinrichtung der Kunststoffvorformlinge nach der ersten Transporteinrichtung angeordnet ist, sowie wenigstens eine weitere Transporteinrichtung, welche in der Transporteinrichtung nach der Sortiereinrichtung angeordnet ist, wobei die Vorrichtung eine Inspektionseinrichtung zum Inspizieren der transportierten Kunststoffvorformlinge aufweist.

Erfindungsgemäß ist diese Inspektionseinrichtung zwischen dem Reservoir und der Sortiereinrichtung angeordnet.

Damit wird im Rahmen der Erfindung insbesondere auch die Inspektionstechnik bzw. die Inspektionseinrichtung an einer bestimmten vorgegebenen Stelle der Anlage vorgeschlagen.

Durch die Anordnung der Inspektionseinrichtung nach dem Reservoir wird sichergestellt, dass auch solche Schäden erfasst werden können, die gerade durch die Lagerung in dem Reservoir, bei dem es sich beispielsweise um ein Silo handeln kann, erfasst werden können. Weiterhin ist es möglich, die Inspektion in einem Bereich durchzuführen, in dem die Kunststoffvorformlinge vereinzelt vorliegen (etwa, wie unten genauer ausgeführt vereinzelt auf einer Transportfläche wie einem Transportband). Dennoch muss auch beim Aussondern eines Kunststoffvorformlings noch keine Lücke in dem Strom der Behältnisse geschlossen werden, da diese noch nicht definiert vereinzelt, das heißt, in einer Reihe vereinzelt angeordnet sind.

Bei einer weiteren bevorzugten Ausführungsform ist es auch möglich, dass die Vorrichtung eine Herstellungseinrichtung zum Herstellen von Kunststoffvorformlingen aufweist, beispielsweise eine Spritzgussmaschine, welche die Kunststoffvorformlinge herstellt und beispielsweise dem Silo zuführt. Allerdings ist es auch möglich, dass diese Erzeugungseinrichtung an anderen Orten angeordnet ist, und lediglich bereits hergestellte Kunststoffvorformlinge in das Silo eingeführt werden. Daneben wäre es auch denkbar, dass anstelle des Reservoirs eine Herstellungseinrichtung vorgesehen ist. Die Anmelderin behält sich vor, auch für einen derartigen Gegenstand Schutz zu beanspruchen.

Bevorzugt ist die Transporteinrichtung mehrstufig aufgebaut. Insbesondere weist die Transporteinrichtung mehrere aufeinander folgende Transporteinheiten auf, welche besonders bevorzugt die Kunststoffvorformlinge in unterschiedlicher Weise transportieren.

Bei einer bevorzugten Ausführungsform weist die Sortiereinrichtung eine erste drehbare Rolle und ein zweite drehbare Rolle auf, wobei die beiden Drehachsen dieser Rollen parallel zueinander sind, und die Kunststoffvorformlinge zwischen diesen Rollen geführt werden können und insbesondere an ihren Tragringen gestützt werden können. Diese Sortiereinrichtung bewirkt gleichzeitig ein Ausrichten der Kunststoffvorformlinge und einen Transport derselben in einer Reihe. Dabei ist es möglich, dass die Kunststoffvorformlinge auf diese Rollen fallen und durch diese Rollen ausgerichtet werden.

Bei einer weiteren bevorzugten Ausführungsform schließt sich an die Sortiereinrichtung mittelbar oder unmittelbar eine Eintakteinrichtung an, welche die in Reihe und insbesondere aneinander stoßend transportierten Kunststoffvorformlinge vereinzelt und eine insbesondere konstante Teilung zwischen den Kunststoffvorformlingen schafft.

Bei einer bevorzugten Ausführungsform ist die Inspektionseinrichtung dazu geeignet und bestimmt, eine Inspektion der Kunststoffvorformlinge während ihres Transports vorzunehmen. Dies bedeutet, dass die Kunststoffvorformlinge bevorzugt in der Bewegung inspiziert werden.

Bei einer weiteren bevorzugten Ausführungsform weist die Vorrichtung eine Erwärmungseinrichtung auf, welche sich insbesondere an die hier beschriebenen Einheiten und insbesondere auch an die beschriebene Eintakteinrichtung wie einen Eintaktstern anschließt.

Bei eine bevorzugten Ausführungsform inspiziert die Inspektionseinrichtung die Kunststoffvorformlinge in einem Bereich des Transportpfads, in welchem diese nicht vereinzelt und/oder nicht in einer definierten Stellung transportiert werden. Allerdings sind besonders bevorzugt die Kunststoffvorformlinge in diesem Bereich zumindest teilweise voneinander beabstandet. Bei einer bevorzugten Ausführungsform inspiziert die Inspektionseinrichtung die Kunststoffvorformlinge in einem Bereich des Transportpfads, in welchem diese nicht in einer Reihe transportiert werden.

Bei einer weiteren bevorzugten Ausführungsform weist die Inspektionseinrichtung wenigstens eine Bildaufnahmeeinrichtung auf, welche wenigstens ein Bild der transportierten Kunststoffvorformlinge aufnimmt. Dabei ist es möglich, dass die Inspektionseinrichtung Bilder der einzelnen Kunststoffvorformlinge aufnimmt. Es wäre jedoch auch möglich, dass Bilder einer Vielzahl von Kunststoffvorformlingen aufgenommen werden. Bevorzugt weist die Vorrichtung auch eine Auswerteeinrichtung auf, welche die von der Bildaufnahmeeinrichtung aufgenommenen Bilder auswertet und insbesondere anhand der Bilder entscheidet, ob einzelne Kunststoffvorformlinge beschädigt sind und/oder ausgeschleust werden müssen.

Bei einer weiteren bevorzugten Ausführungsform ist die Bildaufnahmeeinrichtung derart angeordnet, dass sie die Kunststoffvorformlinge unter einem Winkel beobachtet, der zwischen 5° und 85° bezogen auf die Transportrichtung der Kunststoffvorformlinge liegt. Dabei ist es insbesondere möglich, dass die Kunststoffvorformlinge in einer bestimmten Ebene transportiert werden und die Bildaufnahmeeinrichtung diese Ebene unter einem schrägen Winkel beobachtet. Damit beobachtet die Bildaufnahmeeinrichtung bevorzugt die Kunststoffvorformlinge nicht senkrecht bezüglich der Transportebene, sondern schräg hierzu.

Besonders bevorzugt ist ein Winkel zwischen dieser Ebene zwischen 10° und 80°, bevorzugt zwischen 15° und 75°, bevorzugt zwischen 20° und 70° und besonders bevorzugt zwischen 25° und 65°.

Wie oben erwähnt, weist die Vorrichtung bevorzugt eine Auswerteeinrichtung auf, welche die von der Bildaufnahmeeinrichtung aufgenommenen Bilder auswertet und aufgrund dieser Auswertung auf einen Zustand der Kunststoffvorformlinge rückschließt.

Besonders bevorzugt setzt die Auswerteeinrichtung dabei künstliche Intelligenz ein. So ist es möglich, dass in einer Speichereinrichtung eine Vielzahl von Differenzbildern abgespeichert ist, welche bestimmte typische Fehler aufweisen, wie etwa fehlerhafte Mündungen, fehlerhafte Tragringe, fehlerhafte Grundkörper der Kunststoffvorformlinge und dergleichen. Auf diese Weise kann durch einen Vergleich der aufgenommenen Bilder mit diesen Referenzbildern auf einen bestimmten Fehler geschlossen werden. Dabei ist es auch möglich, dass diese Auswerteeinrichtung etwa im Wege eines "Deep Learnings" auf unterschiedlichste Fehler und Fehlerstrukturen eingelernt wird. Weiterhin ist es auch möglich, dass diese Auswerteeinrichtung selbstlernend ausgeführt ist, das heißt, dass auch anhand ausgeschleuster Kunststoffvorformlinge wiederum die Maschine weitere oder zusätzliche Fehlertypen erfasst.

Unter Deep Learning bezeichnet man eine Methode des maschinellen Lernens, welche künstliche neuronale Netze (KNN), insbesondere mit zahlreichen Zwischenschichten zwischen Eingabeschicht und Ausgabeschicht einsetzt und dadurch eine umfangreiche innere Struktur herausbildet. Es handelt sich hierbei um eine spezielle Methode der Informationsverarbeitung.

Bei einer bevorzugten Ausführungsform prüft die Auswerteeinrichtung bzw. die Bildaufnahmeeinrichtung die Kunststoffvorformlinge auf Kriterien hin, die aus einer Gruppe von Kriterien ausgewählt sind, welche Kontaminationen, eine Farbe des Kunststoffvorformlings, eine Länge des Kunststoffvorformlings, eine Länge eines Anspritzpunktes, Unterspritzungen, eine Ovalität, Fehler an der Mündungsoberfläche und dergleichen enthält.

Wie oben erwähnt, nimmt bevorzugt die Bildaufnahmeeinrichtung ein ortsaufgelöstes Bild dieser Kunststoffvorformlinge auf. So kann es sich beispielsweise bei der Bildaufnahmeeinrichtung um eine Kamera handeln.

Bei einer weiteren bevorzugten Ausführungsform weist die Vorrichtung eine Ausschleuseeinrichtung auf, welche dazu geeignet und bestimmt ist, einzelne Kunststoffvorformlinge oder Gruppen von Kunststoffvorformlingen aus dem Transportpfad auszuschleusen. Dabei ist es möglich, dass diese Ausschleuseeinrichtung an die Auswerteeinrichtung gekoppelt ist, um auf diese Weise bestimmte Kunststoffvorformlinge aus dem Transportpfad auszuschleusen.

Bei einer weiteren bevorzugten Ausführungsform ist diese Ausschleuseeinrichtung in der Transportrichtung der Kunststoffvorformlinge vor der Sortiereinrichtung angeordnet. Auf diese Weise kann erreicht werden, dass der Sortiereinrichtung bereits keine fehlerhaften Kunststoffvorformlinge mehr zugeführt werden und auf diese Weise kann auch die Betriebssicherheit der Sortiereinrichtung beispielsweise eines Rollensortierers erhöht werden.

Bei einer weiteren bevorzugten Ausführungsform ist die Inspektionseinrichtung in einem Bereich der Vorrichtung angeordnet, in dem die Kunststoffvorformlinge liegend transportiert werden. So ist es möglich, dass die Kunststoffvorformlinge wenigstens abschnittsweise liegend, beispielsweise auf einem Transportband gefördert werden. Die Inspektionseinrichtung ist bevorzugt im Bereich dieser liegenden Förderung angeordnet. In diesem Bereich ist in besonders günstiger Weise eine Inspektion der Kunststoffvorformlinge möglich.

Bei einer besonders bevorzugten Ausführungsform weist die erste Transporteinrichtung wenigstens ein erstes Transportband auf, welches die Kunststoffvorformlinge liegend transportiert. Unter einem liegenden Transport wird dabei ein Transport verstanden, in dem Kunststoffvorformlinge nicht beispielsweise in einer vertikalen Richtung ausgerichtet sind, insbesondere mit ihrer Mündung nach oben.

Bevorzugt weise die Transporteinrichtung auch ein zweites Transportband auf, welches die Kunststoffvorformlinge liegend fördert. Dabei sind besonders bevorzugt diese beiden Transportbänder nicht unmittelbar nacheinander angeordnet, sondern zwischen diesen Transportbändern ist eine weitere Fördereinrichtung vorgesehen, welche die Kunststoffvorformlinge fördert. Insbesondere kann dabei diese weitere Fördereinrichtung eine Transporthöhe, das heißt eine Höhe der Kunststoffvorformlinge über einem Boden ändern. So kann beispielsweise diese weitere Transporteinrichtung die Kunststoffvorformlinge von einer größeren Höhe in eine niedrigere Höhe fördern.

Bei einer weiteren bevorzugten Ausführungsform ist die Inspektionseinrichtung bzw. die Bildaufnahmeeinrichtung unmittelbar nach dem Reservoir angeordnet. In diesem Bereich ist besonders bevorzugt ein Transportband vorgesehen, welches die Kunststoffvorformlinge fördert. Bei einer weiteren vorteilhaften Ausgestaltung ist die Bildaufnahmeeinrichtung und/oder die Inspektionseinrichtung -insbesondere direkt- vor der Sortiereinrichtung angeordnet. In diesem Falle wäre es auch möglich, dass sich an die Bildaufnahmereinrichtung auch unmittelbar die Ausschleuseeinrichtung anschließt.

Beide Ausgestaltungen haben den Vorteil, dass eine bereits vorhandene Maschinenperipherie genutzt werden kann, um die Inspektionseinrichtung anzuordnen und kein weiterer Arbeitsraum hierfür geschaffen werden muss. Auf diese Weise können die Investitionskosten für derartige Inspektionseinrichtungen gesenkt werden. Auch entstehen insgesamt keine Lücken in der Linie, da wie oben erwähnt, die Inspektion noch vor der Vereinzelung der Kunststoffvorformlinge stattfindet. Bei einer weiteren vorteilhaften Ausführungsform ist daher die Inspektionseinrichtung, wie erwähnt, so angeordnet, dass die Kunststoffvorformlinge während ihres Transports auf einem der Transportbänder inspiziert werden.

Die Inspektionseinrichtung kann auch mehrere Bildaufnahmeeinrichtungen aufweisen, welche die transportierten Kunststoffvorformlinge beobachten.

Die vorliegende Erfindung ist weiterhin auf ein Verfahren zum Behandeln von Kunststoffvorformlingen gerichtet, wobei eine Vielzahl von Kunststoffvorformlingen in einem Reservoir aufgenommen wird und mit wenigstens einer ersten Transporteinrichtung Kunststoffvorformlinge aus dem Reservoir abtransportiert werden. Weiterhin werden die Kunststoffvorformlinge mit einer Sortiereinrichtung, welche in einer Transportrichtung der Kunststoffvorformlinge nach der ersten Transporteinrichtung angeordnet ist, sortiert und mit wenigstens einer weiteren Transporteinrichtung, welche in der Transportrichtung nach der Sortiereinrichtung angeordnet ist weitertransportiert, wobei eine Inspektionseinrichtung die transportierten Kunststoffvorformlinge inspiziert.

Erfindungsgemäß ist diese Inspektionseinrichtung zwischen dem Reservoir und der Sortiereinrichtung angeordnet und/oder die Inspektionseinrichtung nimmt diese Inspektion zwischen dem Reservoir und der Sortiereinrichtung vor.

Besonders bevorzugt nimmt die Inspektionseinrichtung Bilder und insbesondere ortsaufgelöste Bilder der Kunststoffvorformlinge auf. Bei einer weiteren bevorzugten Ausführungsform werden diese ortsaufgelösten Bilder ausgewertet und anhand der Auswertung entschieden, ob es sich um fehlerfreie oder fehlerhafte Kunststoffvorformlinge handelt.

Bei einem weiteren bevorzugten Verfahren werden fehlerhafte Kunststoffvorformlinge aus dem Transportpfad der Kunststoffvorformlinge ausgeschleust. Dies bedeutet, dass als Gutteile identifizierte Kunststoffvorformlinge weitertransportiert und letztlich zu Behältnissen verarbeitet werden, wohin hingehend als fehlerhaft erkannte Kunststoffvorformlinge aus dem Transportpfad ausgeschleust werden. Besonders bevorzugt findet dieses Ausschleusen noch vor dem Sortieren der Kunststoffvorformlinge statt.

Weitere Vorteile und Ausführungsformen ergeben sich aus der beigefügten Zeichnung. Darin zeigt:

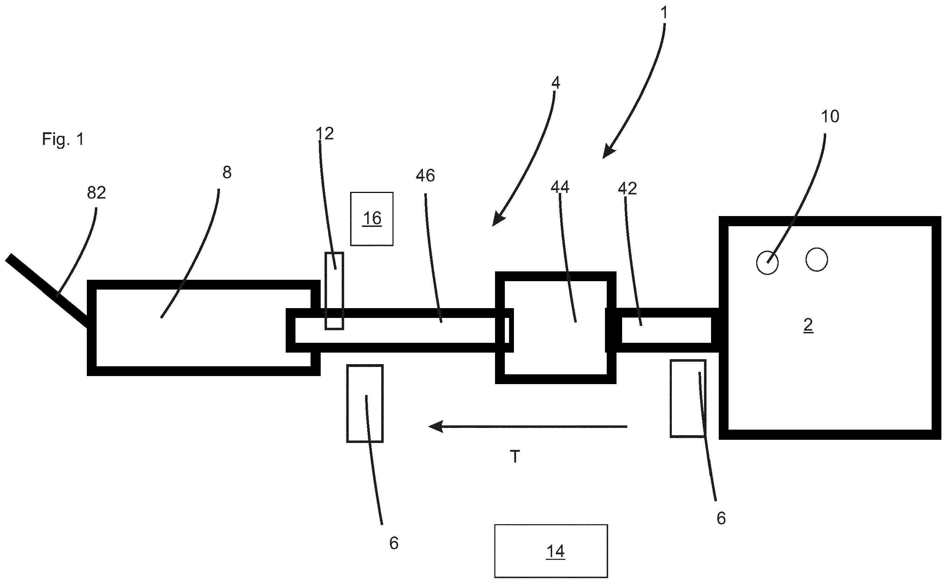

- Fig. 1: eine schematische Darstellung einer erfindungsgemäßen Vorrichtung.

Figur 1 zeigt eine schematische Darstellung einer erfindungsgemäßen Vorrichtung 1. Diese weist ein Reservoir 2 auf, in dem eine Vielzahl von Kunststoffvorformlingen 10 (nur schematisch dargestellt) angeordnet ist. An dieses Reservoir 2 schließt eine in ihrer Gesamtheit mit 4 bezeichnete Transporteinrichtung an. Vor diesem Reservoir 2 kann eine (nicht gezeigte) Herstellungseinrichtung zum Herstellen der Kunststoffvorformlinge, wie etwa eine Spritzgussmaschine vorgesehen sein.

Diese Transporteinrichtung 4 weist dabei bevorzugt ein erstes Transportband 42 auf, welches beispielsweise als Silo-Band ausgeführt ist. An dieses erste Transportband 42 schließt sich hier eine Fördereinrichtung bzw. eine Transporteinheit 44 an, welche insbesondere die Kunststoffvorformlinge in andere Höhen insbesondere nach unten transportiert. Dabei kann es sich bei der Transporteinheit 44 um einen Hochförderer handeln.

An diese Transporteinheit 44 schließt sich ein weiteres Transportband 46 an, welches hier in Form von Zwischenbändern ausgeführt ist.

Das Bezugszeichen 8 kennzeichnet eine Sortiereinrichtung, welche die Kunststoffvorformlinge sortiert, wobei, wie oben erwähnt, diese Sortiereinrichtung 8 in der Transportrichtung der Kunststoffvorformlinge sich erstreckende drehbare Rollen aufweisen kann. An diese Sortiereinrichtung 8 schließt sich eine weitere Transporteinrichtung in Form einer Transportschiene 82 an, in der die Kunststoffvorformlinge bevorzugt bereits in Reihe transportiert werden. An diese Transportschiene kann sich ein (nicht gezeigter) Eintaktstern anschließen, der die Kunststoffvorformlinge vereinzelt bzw. auf Teilung bringt.

Die Bezugszeichen 6 beziehen sich auf mögliche (und insbesondere alternative) Anordnungen der Inspektionseinrichtungen. Man erkennt, dass diese entweder im Bereich des ersten Transportbandes 42 oder des zweiten Transportbandes 46 angeordnet ist.

Das Bezugszeichen 12 kennzeichnet eine Ausschleuseeinrichtung, welche dazu dient, als fehlerhaft erkannte Kunststoffvorformlinge aus dem Transportpfad T auszuschleusen.

Das Bezugszeichen 14 kennzeichnet eine Auswerteeinrichtung, welche die von der Inspektionseinrichtung 6 aufgenommenen Bilder auswertet und danach entscheidet, welche Kunststoffvorformlinge als fehlerhaft anzusehen sind. Diese Auswerteeinrichtung 14 steuert wiederum eine Steuerungseinrichtung 16 an, welche die Ausschleuseeinrichtung 12 steuert. Auf diese Weise ist es möglich, dass individuelle Kunststoffvorformlinge aus dem Transportpfad - jedoch noch vor der Sortiereinrichtung 8 - ausgeschleust werden.

### Bezugszeichenliste

- 1: Vorrichtung
- 2: Reservoir
- 4: Transporteinrichtung
- 6: Inspektionseinrichtungen
- 8: Sortiereinrichtung
- 12: Ausschleuseeinrichtung
- 14: Auswerteeinrichtung
- 16: Steuerungseinrichtung
- 16: Steuerungseinrichtung
- 42: Transportband, erstes
- 44: Transporteinheit
- 46: Transportband, zweites
- 82: Transportschiene

- T: Transportpfad

## Patentansprüche

1. Vorrichtung zum Behandeln von Kunststoffvorformlingen mit einem Reservoir (2), welches dazu geeignet und bestimmt ist, eine Vielzahl von Kunststoffvorformlingen (10) aufzunehmen, mit wenigstens einer ersten Transporteinrichtung (4), welche die Kunststoffvorformlinge (10) aus dem Reservoir abtransportiert, und mit einer Sortiereinrichtung (8), welche in einer Transportrichtung der Kunststoffvorformlinge (10) nach der ersten Transporteinrichtung angeordnet ist und mit wenigstens einer weiteren Transporteinrichtung (82), welche in der Transportrichtung (T) vor der Sortiereinrichtung (8) angeordnet ist, wobei die Vorrichtung (1) eine Inspektionseinrichtung (6) zum Inspizieren der transportierten Kunststoffvorformlinge aufweist,
**dadurch gekennzeichnet, dass**
die Inspektionseinrichtung zwischen dem Reservoir und der Sortiereinrichtung (8) angeordnet ist.

2. Vorrichtung (1) nach Anspruch 1,
**dadurch gekennzeichnet, dass**
die Inspektionseinrichtung die Kunststoffvorformlinge (10) in einem Bereich des Transportpfads inspiziert, in welchem diese nicht vereinzelt und/oder nicht in einer definierten Stellung transportiert werden.

3. Vorrichtung (1) nach wenigstens einem der vorangegangenen Ansprüche,
**dadurch gekennzeichnet, dass**
die Inspektionseinrichtung eine Bildaufnahmeeinrichtung aufweist, welche wenigstens ein Bild der transportierten Kunststoffvorformlinge aufnimmt.

4. Vorrichtung (1) nach dem vorangegangenen Anspruch,
**dadurch gekennzeichnet, dass**
die Bildaufnahmeeinrichtung derart angeordnet ist, dass sie die Kunststoffvorformlinge unter einem Winkel beobachtet, der zwischen 5° und 85° bezogen auf die Transportrichtung der Kunststoffvorformlinge liegt.

5. Vorrichtung nach wenigstens einem der vorangegangenen Ansprüche 3 - 4,
**dadurch gekennzeichnet, dass**
die Vorrichtung (1) eine Auswerteeinrichtung aufweist, welche die von der Bildaufnahmeeinrichtung aufgenommenen Bilder auswertet und aufgrund dieser Auswertung auf einen Zustand der Kunststoffvorformlinge rückschließbar ist.

6. Vorrichtung (1) nach wenigstens einem der vorangegangenen Ansprüche,
**dadurch gekennzeichnet, dass**
die Vorrichtung eine Ausschleuseeinrichtung (12) aufweist, welche dazu geeignet ist, einzelne Kunststoffvorformlinge aus dem Transportpfad auszuschleusen.

7. Vorrichtung (1) nach dem vorangegangenen Anspruch,
**dadurch gekennzeichnet, dass**
die Ausschleuseeinrichtung (12) in der Transportrichtung vor der Sortiereinrichtung angeordnet ist.

8. Vorrichtung (1) nach wenigstens einem der vorangegangenen Ansprüche,
**dadurch gekennzeichnet, dass**
die erste Transporteinrichtung wenigstens ein erstes Transportband (42) aufweist, welches die Kunststoffvorformlinge liegend transportiert.

9. Vorrichtung (1) nach dem vorangegangenen Anspruch,
**dadurch gekennzeichnet, dass**
die Inspektionseinrichtung derart angeordnet ist, dass sie die Kunststoffvorformlinge während ihres Transports mit dem Transportband inspiziert.

10. Verfahren zum Behandeln von Kunststoffvorformlingen, wobei eine Vielzahl von Kunststoffvorformlingen in einem Reservoir (2) aufgenommen wird und mit wenigstens einer ersten Transporteinrichtung (4) Kunststoffvorformlinge aus dem Reservoir abtransportiert werden, und mit einer Sortiereinrichtung (8), welche in einer Transportrichtung der Kunststoffvorformlinge (10) nach der ersten Transporteinrichtung angeordnet ist, sortiert werden und mit wenigstens einer weiteren Transporteinrichtung (82), welche in der Transportrichtung (T) nach der Sortiereinrichtung (8) angeordnet ist weiter transportiert werden, wobei eine Inspektionseinrichtung (6) die transportierten Kunststoffvorformlinge inspiziert,
**dadurch gekennzeichnet, dass**
die Inspektionseinrichtung zwischen dem Reservoir und der Sortiereinrichtung (8) angeordnet ist.

## Claims

1. Apparatus for treating plastic preforms, having a reservoir (2) which is suitable and intended for receiving a plurality of plastic preforms (10), having at least one first transport device (4) which transports the plastic preforms (10) out of the reservoir, and having a sorting device (8) which is arranged downstream of the first transport device (4) in a transport direction of the plastic preforms (10), and having at least one further transport device (82) which is arranged upstream of the sorting device (8) in the transport direction (T) wherein the apparatus (1) having an inspection device (6) for inspecting the transported plastic preforms,
**characterized in that**
the inspection device is arranged between the reservoir and the sorting device (8).

2. Apparatus (1) according to claim 1,
**characterized in that**
the inspection device inspects the plastic preforms (10) in a region of the transport path in which they are not separated and/or are not transported in a defined position.

3. Apparatus (1) according to at least one of the preceding claims,
**characterized in that**
the inspection device has an image recording device which records at least one image of the transported plastic preforms.

4. Apparatus (1) according to the preceding claim,
**characterized in that**
the image recording device is arranged in such a way that it observes the plastic preforms at an angle which is between 5° and 85° with respect to the transport direction of the plastic preforms.

5. Apparatus according to at least one of the preceding claims 3 - 4,
**characterized in that**
the apparatus (1) has an evaluation device which evaluates the images recorded by the image recording device and, on the basis of this evaluation, can be concluded as to a state of the plastic preforms.

6. Apparatus (1) according to at least one of the preceding claims,
**characterized in that**
the apparatus has an ejection device (12) which is suitable for discharging individual plastic preforms from the transport path.

7. Apparatus (1) according to the preceding claim,
**characterized in that**
the ejection device (12) is arranged upstream of the sorting device in the transport direction.

8. Apparatus (1) according to at least one of the preceding claims,
**characterized in that**
the first transport device comprises at least a first transport belt (42) which transports the plastic preforms horizontally.

9. Apparatus (1) according to the preceding claim,
**characterized in that**
the inspection device is arranged to inspect the plastic preforms during their transport with the conveyor belt.

10. Method for treating plastic preforms, wherein a plurality of plastic preforms is received in a reservoir (2) and plastic preforms are transported away from the reservoir by at least one first transport device (4), and with a sorting device (8) which is arranged downstream of the first transport device in a transport direction of the plastic preforms (10), and are transported further by at least one further transport device (82) which is arranged downstream of the sorting device (8) in the transport direction (T), wherein an inspection device (6) inspecting the transported plastic preforms,
**characterized in that**
the inspection device is arranged between the reservoir and the sorting device (8).

## Revendications

1. Dispositif de traitement de préformes en matière plastique avec un réservoir (2), lequel est adapté pour et se destine à recevoir une pluralité de préformes en matière plastique (10), avec au moins un premier système de transport (4), lequel transporte les préformes en matière plastique (10) pour les faire sortir du réservoir, et avec un système de tri (8), lequel est disposé dans une direction de transport des préformes en matière plastique (10) après le premier système de transport, et avec au moins un autre système de transport (82), lequel est disposé dans la direction de transport (T) devant le système de tri (8), dans lequel le dispositif (1) présente un système d'inspection (6) pour inspecter les préformes en matière plastique transportées,
**caractérisé en ce que**
le système d'inspection est disposé entre le réservoir et le système de tri (8).

2. Dispositif (1) selon la revendication 1,
**caractérisé en ce que**
le système d'inspection inspecte les préformes en matière plastique (10) dans une zone du chemin de transport, sur lequel celles-ci ne sont pas isolées et/ou ne sont pas transportées dans une position définie.

3. Dispositif (1) selon au moins l'une quelconque des revendications précédentes,
**caractérisé en ce que**
le système d'inspection présente un système de prise d'images, lequel prend au moins une image des préformes en matière plastique transportées.

4. Dispositif (1) selon la revendication précédente,
**caractérisé en ce que**
le système de prise d'images est disposé de telle manière qu'il observe les préformes en matière plastique selon un angle, qui est compris entre 5° et 85° par rapport à la direction de transport des préformes en matière plastique.

5. Dispositif selon au moins l'une quelconque des revendications précédentes 3 - 4,
**caractérisé en ce que**
le dispositif (1) présente un système d'évaluation, lequel évalue les images prises par le système de prise d'images et un état des préformes en matière plastique peut être déduit sur la base de cette évaluation.

6. Dispositif (1) selon au moins l'une quelconque des revendications précédentes,
**caractérisé en ce que**
le dispositif présente un système d'évacuation (12), lequel est adapté pour évacuer hors du chemin de transport diverses préformes en matière plastique.

7. Dispositif (1) selon la revendication précédente,
**caractérisé en ce que**
le système d'évacuation (12) est disposé devant le système de tri dans la direction de transport.

8. Dispositif (1) selon au moins l'une quelconque des revendications précédentes,
**caractérisé en ce que**
le premier système de transport présente au moins une première bande de transport (42), laquelle transporte en position couchée les préformes en matière plastique.

9. Dispositif (1) selon la revendication précédente,
**caractérisé en ce que**
le système d'inspection est disposé de telle manière qu'il inspecte les préformes en matière plastique au cours de leur transport avec la bande de transport.

10. Procédé de traitement de préformes en matière plastique, dans lequel une pluralité de préformes en matière plastique est reçue dans un réservoir (2) et des préformes en matière plastique sont transportées avec au moins un premier système de transport (4) pour sortir du réservoir, et sont triées avec un système de tri (8), lequel est disposé dans une direction de transport des préformes en matière plastique (10) après le premier système de transport, et continuent à être transportées avec au moins un autre système de transport (82), lequel est disposé dans la direction de transport (T) après le système de tri (8), dans lequel un système d'inspection (6) inspecte les préformes en matière plastique transportées,
**caractérisé en ce que**
le système d'inspection est disposé entre le réservoir et le système de tri (8).
